# EUROPEAN PATENT APPLICATION

(11) **EP 2 835 276 A1**
(43) Date of publication of application: **11.02.2015**
(21) Application number: 14179619.3
(22) Date of filing: 04.08.2014
(51) Int. Cl.: B60C 15/06

(54) **A pneumatic tire with a reinforced flipper or chipper**

(30) Priority: 07.08.2013 US 201313960884
(71) Applicant: The Goodyear Tire & Rubber Company, Akron, Ohio 44316 (US)
(72) Inventor: Dubos, Laurent Roger Andre, L-9176 Niederfeulen (LU); Kavaturu, Mahesh, L-8049 Strassen (LU); Chaidron, Marie Charlotte, B-6717 Metzert (BE); Westgate, Walter Kevin, Uniontown, OH Ohio 44685 (US); Assaad, Mahmoud Cherif, Copley, OH Ohio 44321 (US)
(74) Representative: Kutsch, Bernd

(57) **Abstract**

A bead reinforcement element (54, 56) such as a flipper or chipper for use in a pneumatic tire (10) is disclosed. The bead reinforcement element (54, 56) comprises at least one hybrid or composite cord (130) having at least one first core yarn (132) with at least one second aramid wrap yarn (134) wrapped around the first core yarn (132), the first core yarn (132) having a Young's modulus lower than the Young's modulus of the second aramid wrap yarn (134).

## Description

### Field of the Invention

The present invention relates to a bead reinforcement element such as a chipper or flipper and to a pneumatic tire such as a radial runflat passenger tire or a high performance tire with a reinforced flipper and/or chipper.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity (or Young's Modulus). In particular, the ply turnup ends may be prone to separation from adjacent structural elements of the tire.

A conventional ply may be reinforced with materials such as polyamide/nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A variety of structural design approaches have been used to control separation of tire elements in the bead regions of a tire. For example, one method has been to provide a "flipper" surrounding the bead and the bead filler. The flipper works as a spacer that keeps the ply from making direct contact with the inextensible beads, allowing some degree of relative motion between the ply, where it turns upward under the bead, and the respective beads. In this role as a spacer, a flipper may reduce disparities of strain on the ply and on the adjacent rubber components of the tire (e.g., the filler apex, the sidewall rubber, in the bead region, and the elastomeric portions of the ply itself).

The flipper may be made of a square woven cloth that is a textile in which each fiber, thread, or cord has a generally round cross-section. When a flipper is cured with a tire, the stiffness of the fibers/cords becomes essentially the same in any direction within the plane of the textile flipper.

In addition to the use of flippers as a means by which to reduce the tendency of a ply to separate, or as an alternative, another method that has been used involves the placement of "chippers." A chipper is a circumferentially deployed metal or fabric layer that is disposed within the bead region in the portion of the tire where the bead fits onto the wheel rim. More specifically, the chipper lies inward of the wheel rim (i.e., toward the bead) and outward (i.e., radially outward, relative to the bead viewed in cross section) of the portion of the ply that turns upward around the bead. Chippers serve to stiffen, and increase the resistance to flexure of, the adjacent rubber material, which itself is typically adjacent to the turnup ply endings.

### Summary of the Invention

The invention relates to a bead reinforcement element in accordance with claim 1 and to a tire comprising such an element in accordance with claim 13.

Dependent claims refer to preferred embodiments of the invention.

A pneumatic tire in accordance with a preferred aspect of the present invention includes a carcass reinforced by a carcass ply extending from a first bead to a second bead, at least one belt ply disposed radially outward of the carcass ply in a crown portion of the pneumatic tire, and a bead reinforcement disposed adjacent the first bead and the second bead. The bead reinforcement includes at least one hybrid cord having at least one first core yarn with at least one second aramid wrap yarn wrapped around the first core yarn such that the first core yarn has a Young's modulus less than a Young's modulus of the second wrap yarn.

According to another preferred aspect of the bead reinforcement element and the pneumatic tire, the first core yarn has a linear density value in the range between 700 Dtex to 900 Dtex.

According to still another preferred aspect of the bead reinforcement element and the pneumatic tire, the cord has a structure of one single polyamide/nylon core yarn and one single aramid wrap yarn.

According to yet another preferred aspect of the bead reinforcement element and the pneumatic tire, the bead reinforcement element has an end count of cord ends per 2.54 cm in the range between 15 to 32.

According to still another preferred aspect of the bead reinforcement element and the pneumatic tire, the second wrap yarn has a linear density value in the range between 900 Dtex to 1100 Dtex.

According to yet another aspect of the pneumatic tire, the bead reinforcement element is a flipper or a chipper.

### Definitions

"Apex" or "bead filler apex" means an elastomeric filler located radially above the bead core and between the plies and the turnup plies.

"Axial" and "Axially" mean the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Chipper" refers to a narrow band of fabric located in the bead area whose function is to reinforce the bead area and stabilize the radially inwardmost part of the sidewall.

"Flipper" refers to a reinforcing fabric around the bead core for strength and to tie the bead core in the tire body.

"Gauge" refers generally to a measurement and specifically to thickness.

"Ply" means a cord-reinforced layer of rubber-coated radially deployed or otherwise parallel cords.

"Radial" and "radially" mean directions radially toward or away from the axis of rotation of the tire.

"Toe guard" refers to the circumferentially deployed elastomeric rim-contacting portion of the tire axially inward of each bead.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of another bead region for use with present invention; and
FIG. 4 represents a schematic view of a cord for a flipper or chipper in accordance with the present invention.

### Detailed Description of Example Embodiments of the Present Invention

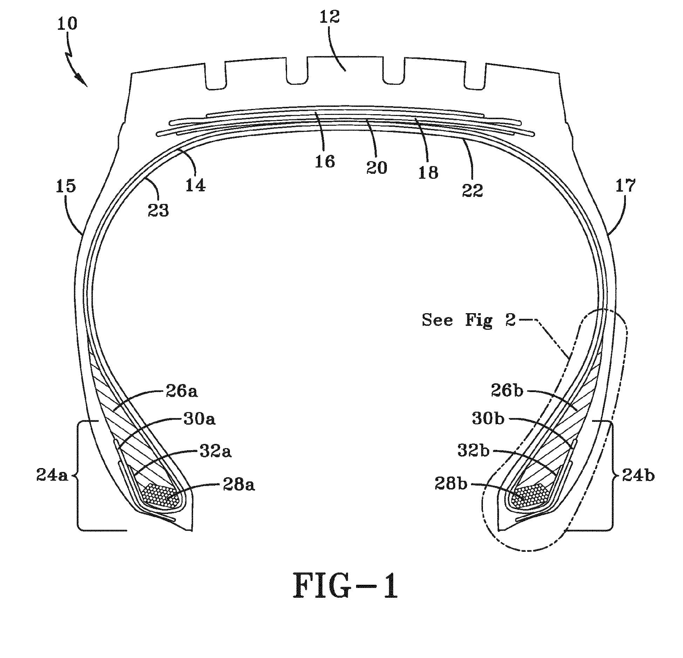

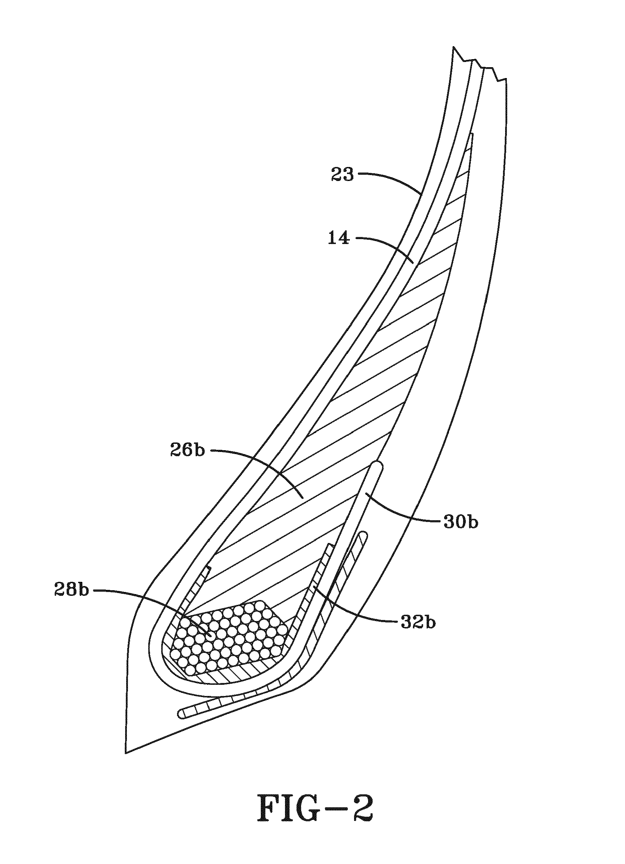

FIG. 1 shows an example tire 10 for use with reinforcing structures, such as flippers and chippers, in accordance with the present invention. The example tire 10 has a tread 12, an inner liner 23, a belt structure 16 comprising belts 18, 20, a carcass 22 with preferably a single carcass ply 14, two sidewalls 15, 17, and two bead regions 24a, 24b comprising bead filler apexes 26a, 26b and beads (or bead cores) 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Preferably, each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 engages the axial outer surfaces of two flippers 32a, 32b.

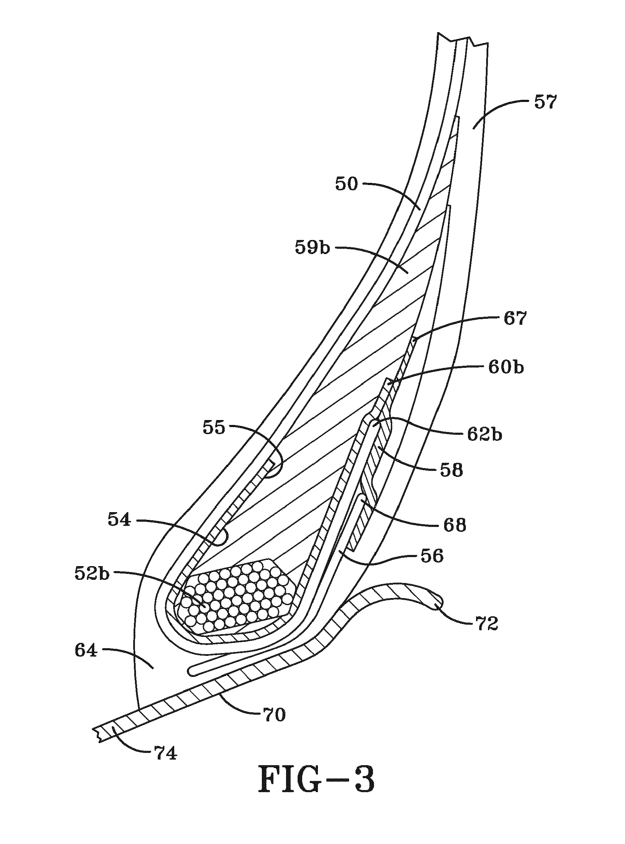

FIG. 3 shows, in cross-sectional view, the bead region of another example tire for use with reinforcing structures, such as flippers and chippers, in accordance with the present invention. A carcass ply 50 wraps around a bead 52b and is separated from the bead by a flipper 54. The flipper 54 may be a layer disposed around the bead 52b and inward of a portion of the carcass ply 50 which turns up under the bead. The flipper 54 preferably has physical properties (such as shearing modulus of elasticity) intermediate to those of a rigid metal bead 52b and a less rigid carcass ply 50. The flipper 54 therefore may serve as an active strain-relieving layer separating the bead 52b from the carcass ply 50. The carcass ply 50 may be reinforced with metal, as is conventional in the tire art.

The example tire of FIG. 3 also may have a chipper 56 located in the bead area for reinforcing the bead area and stabilizing the axially inwardmost part of the sidewall 57. The flipper 54 and chipper 56, along with the patch 58 uniting them, are discussed separately below, and then in operational conjunction with one another.

The flipper 54 wraps around the bead 52b and extends radially outward into the sidewall regions of the example tire. The axially inward portion 55 of the flipper 54 terminates within the bead-filler apex 59b. The axially outward portion 60b of the flipper 54 lies radially beyond a turnup end 62b, which itself is located radially beyond the radially outermost reach of the chipper 56 (discussed separately below). The axially outwardmost portions 62b of the turnup end 62b of the carcass ply 50 may extend radially outward 15 to 30 millimeters beyond the top of a wheel rim flange 72 of a wheel rim 70.

As shown in FIG. 3, the flipper 54 may be deployed about the bead 52b which is itself circumferentially disposed within the example tire. An axially inward portion 55 of the flipper 54 may extend radially outward from the bead 52b to a location approximately axially adjacent to the top of the wheel rim flange 72 of the wheel rim 70. On an axially outward side, the flipper 54 may extend radially outward from the bead 52b to an end 60b above the wheel rim flange 72. The radially outermost reach of the end 60b of the flipper 54 may extend between 7 to 15 millimeters beyond the radially outermost reach of the turnup end 62b. The flipper 54 may be termed "active" because it actively absorbs (i.e. during tire deflection) differential strains between the relatively rigid bead 52b and the relatively less rigid carcass ply 50.

The chipper 56 may be adjacent the portion of the carcass ply 50 that is wrapped around the bead 52b. More specifically, the chipper 56 may be disposed on the opposite side of the portion of the carcass ply 50 from the flipper 54. The axially inwardmost portion of the chipper 56 may lie in the portion of the bead region that, when the tire is mounted on the wheel rim 70, would lie closest to a circularly cylindrical part 74 of the wheel rim. The axially and radially outwardmost portion of the chipper 56 may lie in the portion of the bead region that, when the tire is mounted on the wheel rim 70, would lie axially inward of the circular portion of the wheel rim 70, being separated from the circular portion of the wheel rim by tire rubber, such as a toe guard 64.

In other words, as can be seen in FIG. 3, the chipper 56 may be disposed circumferentially about the radially inwardmost portion of the carcass ply 50 where the carcass ply turns up under the bead 52b. The chipper 56 may extend radially outward, being more or less parallel with the turned up end 62b of the carcass ply 50.

The chipper 56 protects the portion of the carcass ply 50 that wraps around the bead 52b from the strains in the rubber that separates the chipper from the wheel rim 70. The chipper 56 reinforces the bead area and stabilizes the radially inwardmost part of the sidewall 57. In other words, the chipper 56 absorbs deformation in a way that minimizes the transmission of stress-induced shearing strains that arise inward from the wheel rim 70, through the toe guard 64, to the turned up portion 62b of the carcass ply 50, where the chipper is most immediately adjacent to the rigid bead 52b.

The optional patch 58 shown in FIG. 3 may be circumferentially disposed about the bead 52b in such a way as to overlie the radially outermost regions 68 of the chipper 56 and the turned up ends 62b of the carcass ply 50. The patch 58 performs a function similar to that of those of the chipper 56 and the "active" flipper 54. More specifically, the patch 58 may absorb shearing stresses in the rubber parts which might otherwise induce separation of the flexible rubber from the less flexible material of the chipper 56 and the carcass ply 50. The patch 58 may, for example, be made of polyamide/nylon fabric. The radially outwardmost portion 67 of the patch 58 preferably reaches to a minimum level such as extending by at least 5 mm above the upper end 60b of the flipper 54, and preferably 10 to 15 mm above. The radially inwardmost portion of the patch 58 may overlap, for instance overlap about 10 mm, with the chipper 56.

The net effect of the incorporation of the flipper 54 and the chipper 56 is to provide strain buffers that relieve or absorb differential shearing strains that otherwise, were the flippers and chippers not present, could lead to separation of the adjacent materials that have disparate shearing moduli of elasticity. Furthermore, this reinforced construction may increase durability of the tire by means of the incorporation of a smaller number of components than for standard constructions with gum strips.

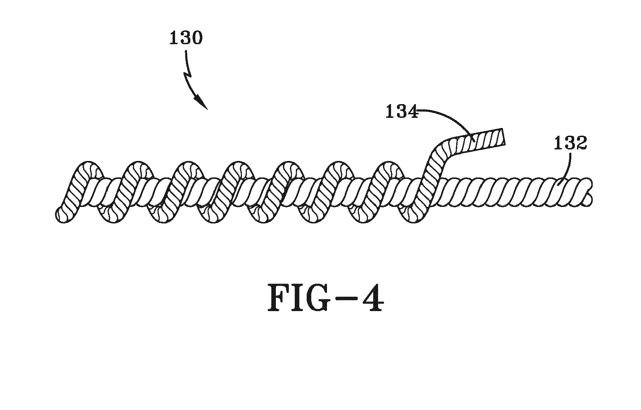

In accordance with the present invention, the flippers 54 and/or chippers 56 of the example tires of Figs. 1 through 3 are formed using at least one cord 130 as seen in FIG. 4. The example cord 130 is a composite, or hybrid cord made of yarns and/or metallic filaments of appropriate characteristics to preferably provide a runflat or high performance tire, such as the example tire 10. The cord 130 is be formed of at least one low modulus (Young's modulus, measured in accordance with ASTM D412) core yarn 132 about which is twisted at least one higher modulus (Young's modulus, measured in accordance with ASTM D412) wrap yarn 134. The construction of the cord 130 allows the lower modulus core yarn (132 in FIG. 4) of the cord 130 to work at a relatively low strain (i.e., normal operating condition) until the cord has reached a specific allowable elongation. From this point (i.e., an uninflated or high speed inflated condition), the higher modulus wrap yarn/filament (134 in FIG. 4) limits the stretch of the cord 130.

Materials for the low modulus core yarn(s) 132 include rayon, polyamide/nylon, polyamide 6 and 6,6, polyethylene terephthalate (PET), polyketone (PK), and polyethylene napthalate (PEN). Materials for the higher modulus wrap yarn/filament include aramid, Normal Tensile Steel, High Tensile Steel, Super Tensile Steel, Ultra Tensile Steel, Mega Tensile Steel, titanium, stainless steel, aluminum, and/or any alloys thereof. In the embodiments shown, aramid is used.

The material selection is based on the desired stress/strain characteristics of the hybrid cord 130 as a whole. However, a main criteria is that the outer wrap yarn(s)/metallic filament(s) 134 has a modulus greater than the core yarn(s) 132. Thus, for example, a single wrap yarn 134 may be aramid with a single polyamide/nylon core yarn 132.

In the example cord 130, both the core yarn 132 and wrap yarn 134 are twisted a given number of turns per unit of length, usually expressed in turns per 2.54 cm (TPI). Additionally, the core yarn 132 and the wrap yarn 134 are twisted together a given number of turns per unit of length (TPI) for the yarns 132, 134 of the cord 130. The direction of twist refers to the direction of slope of the spirals of a yarn or cord when it is held vertically.

Visually, if the slope of the spirals appears to conform in direction to the slope of a letter "S," then the twist is termed "S" or "left handed." If a slope of the spirals appears to visually conform in direction to the slope of a letter "Z," then the twist is termed "Z" or "right handed." An "S" or "left handed" twist direction is understood to be a direction opposite to a "Z" or "right handed" twist. "Twist" is understood to mean the twist imparted to a yarn or filament/yarn component before the yarn or filament/yarn component is incorporated into a cord. "Cord twist" is understood to mean the twist imparted to two or more yarns and filaments/yarns when twisted together with one another to form the cord. "Dtex" is understood to mean the weight in grams of 10,000 meters of a yarn before the yarn has a twist imparted thereto.

For example, a core yarn 132, such as polyamide/nylon and a twist of 2-10 TPI, may be helically wrapped with a wrap yarn 134, such as aramid. The core yarn 132 and wrap yarn 134 may have twists of S, Z, or S & Z. Such a cord 130 in a flipper 54 and/or chipper 56 thus produces good fatigue performance. Preferably, the cord targets are modulus > 5000 MPa at 100°C, 100 % adhesion, and Glass Transition (Tg) > 85°C for a gauge less than 0.56mm.

One cord construction in accordance with the present invention is (900-1100/1 aramid + 700-900/1 polyamide/nylon)[(4-6)Z+(4-6)S]/(4-6)S where the polyamide/nylon core yarn 132 has a lower polyamide/nylon Dtex than conventional cords. The twist per 2.54 cm (TPI) may be optimized at the yarns level (x and y) and at the cord level (z) to ensure equal/balanced structural response. One specific example cord 130 is (1000/1 aramid + 840/1 polyamide/nylon)[4.7Z+5.5S]/4.7S where the lower Dtex polyamide/nylon core yarn 132 has replaced the conventional higher polyamide/nylon Dtex core yarn.

Such a cord 130 may be utilized in a flipper 54 and/or chipper 56 of a high performance or runflat tire, such as the example tire 10. The lower polyamide/nylon Dtex advantageously does not adversely affect the structural response/characteristics of the cord 130. Such an advantage may thus be realized in the improved rolling resistance and enhanced thermal stability due to the reduced volume of polyamide/nylon and superior durability performance due to higher insulation gauges. Additionally, the cord 130 may require a lower total tire cost because of the smaller amount of polyamide/nylon.

As stated above, a flipper 54 and/or chipper 56 of hybrid cords 130 in accordance with the present invention produces unexpectedly improved performance in a tire 10. This flipper 54 and/or chipper 56 thus enhances the performance of the tire 10, even though the complexities of the structure and behavior of the pneumatic tire are such that no complete and satisfactory theory has been propounded.

## Claims

1. A bead reinforcement element for use in a pneumatic tire (10), the bead reinforcement element (54, 56) comprising at least one hybrid or composite cord (130) having at least one first core yarn (132) with at least one second aramid wrap yarn (134) wrapped around the first core yarn (132), the first core yarn (132) having a Young's modulus lower than the Young's modulus of the second aramid wrap yarn (134).

2. The bead reinforcement element of claim 1 wherein the first core yarn (132), the first core yarn (132) has a Young's modulus at least 10 times lower, alternatively at least 20 times lower, than the Young's modulus of the second aramid wrap yarn (134).

3. The bead reinforcement element of claim 1 or 2 wherein the first core yarn (132) is a rayon yarn, a polyamide or Nylon yarn, a polyamide 6 yarn, a polyamide 6,6 yarn, a polyethylene terephtalate (PET) yarn, a polyketone (PK) yarn or a polyethylene naphtalate (PEN) yarn.

4. The bead reinforcement element of at least one of the previous claims wherein the first core yarn (132) has a twist in a range of from 2 to 10 turns per 2.54 cm, preferably 4 to 6 turns per 2.54 cm, and/or wherein the second aramid wrap yarn (134) has a twist in a range of from 2 to 10 turns per 2.54 cm, preferably 4 to 6 turns per 2.54 cm.

5. The bead reinforcement element of at least one of the previous claims wherein the first core yarn (132) has a linear density in a range of from 700 to 900 Dtex, preferably 800 to 900 Dtex, and/or wherein the second aramid wrap yarn (134) has a linear density in a range of from 900 to 1100 Dtex, preferably 950 to 1050 Dtex.

6. The bead reinforcement element of at least one of the previous claims wherein the hybrid or composite cord has a cord twist in a range of from 2 to 10 turns per 2.54 cm, preferably 4 to 6 turns per 2.54 cm.

7. The bead reinforcement element of at least one of the previous claims wherein the hybrid or composite cord (130) has a 1/1 cord construction.

8. The bead reinforcement element of at least one of the previous claims wherein the hybrid or composite cord (130) has the cord construction (900 to 1100 Dtex) aramid/1 + (700 to 900 Dtex)/1 polyamide [(4 to 6)Z + (4 to 6)S]/(4 to 6)S or (900 to 1100 Dtex) aramid/1 + (700 to 900 Dtex)/1 polyamide [(4 to 6)S + (4 to 6)Z]/(4 to 6)Z.

9. The bead reinforcement element of at least one of the previous claims wherein the hybrid or composite cord (130) has the cord construction 1000 Dtex aramid/1 + 840 Dtex/1 polyamide [4.7Z + 5.5S]/4.7S or 1000 Dtex aramid/1 + 840 Dtex/1 polyamide [4.7S + 5.5Z]/4.7Z.

10. The bead reinforcement element of at least one of the previous claims wherein the bead reinforcement element is a flipper (54),

11. The bead reinforcement element of at least one of the previous claims wherein the bead reinforcement element is a chipper (56).

12. The bead reinforcement of at least one of the previous claims wherein the bead reinforcement element has an end count of cord ends per 2.54 cm in a range of from 15 to 32, preferably 20 to 30.

13. A pneumatic tire comprising a carcass reinforced by a carcass ply (14) extending from a first bead to a second bead, at least one belt structure (16) disposed radially outward of the carcass ply (14) in a crown portion of the pneumatic tire (10), and a bead reinforcement element in accordance with at least one of the previous claims disposed adjacent the first bead and/or the second bead.

14. The pneumatic tire of claim 13 wherein the tire (10) has only a single carcass ply (14).

15. The pneumatic tire of claim 13 or 14 wherein the tire (10) is a runflat tire or a high performance passenger tire.
